(19) Europäisches Patentamt
European Patent Office
Office européen des brevets

(11) **EP 1 898 391 A1**

(12) **EUROPEAN PATENT APPLICATION**

(43) Date of publication:
**12.03.2008 Bulletin 2008/11**

(51) Int Cl.:
***G09G 3/28*** *(2006.01)*

(21) Application number: **07116058.4**

(22) Date of filing: **11.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **11.09.2006 KR 20060087368**

(71) Applicant: **Samsung SDI Co., Ltd.**
**Suwon-si**
**Gyeonggi-do (KR)**

(72) Inventors:
• **KIM, Jeong-Hoon,**
**Samsung SDI Co., Ltd.**
**Yongin-si, Kyunggi-do (KR)**

• **PARK, Jung-Pil,**
**Samsung SDI Co., LTD.**
**Yongin-si, Kyunggi-do (KR)**
• **KIM, Suk-Ki,**
**Samsung SDI Co., LTD.**
**Yongin-si, Kyunggi-do (KR)**
• **AN, Jung-Soo,**
**Samsung SDI Co., LTD**
**Yongin-si, Kyunggi-do (KR)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(54) **Plasma display and voltage generator thereof**

(57) The present invention relates to a plasma display device and a voltage generator thereof. The voltage generator for generating a first voltage higher than a second voltage supplied by a power source includes: a Zener diode including an anode electrically connected to the power source; a transistor including a first electrode electrically connected to a cathode of the Zener diode; at least one first resistor electrically connected to the anode of the Zener diode and a control electrode of the transistor; and at least one second resistor electrically connected to the control electrode of the transistor and a second electrode of the transistor, the first voltage being generated at the second electrode of the transistor.

FIG.8

EP 1 898 391 A1

Description

## BACKGROUND OF THE INVENTION

**Field of the Invention**

The present invention relates to a plasma display device and a voltage generator thereof.

**Description of the Related Art**

A plasma display uses a Plasma Display Panel (PDP) that uses a plasma generated by a gas discharge process to display characters or images. The PDP includes, depending on its size, more than several scores to millions of pixels arranged in a matrix pattern.

One frame of such a plasma display is divided into a plurality of subfields having weight values, and each subfield includes a reset period, an address period, and a sustain period. The reset period is for initializing the status of each discharge cell so as to facilitate an addressing operation on the discharge cell. The address period is for selecting turn-on/turn-off cells (i.e., cells to be turned on or off). In addition, the sustain period is for causing the cells to either continue a discharge for displaying an image on the addressed cells or to remain inactive.

In general, during the reset period, to initialize a state of the discharge cell, a voltage at the scan electrode is gradually increased to a Vset voltage, and is gradually decreased to a Vnf voltage. In addition, during the address period, a scan pulse having a scan voltage VscL and an address pulse having a Va voltage are respectively supplied to the scan and address electrodes of the discharge cell to be turned-on. In general, the VscL voltage and the Vnf voltage are set to be the same level. Accordingly, since an address discharge is not appropriately generated when the Vnf voltage is equal to the VscL voltage, a low discharge may be generated. In addition, when an address voltage level is increased to prevent the low discharge, the address discharge is generated in the turn-off discharge cell, and therefore misfiring may occur.

## SUMMARY OF THE INVENTION

The present invention has been made in an effort to provide a plasma display which prevents a low discharge and a driving method thereof.

In addition, the present invention has been made in an effort to provide a voltage generator for reducing the number of power sources in a plasma display which prevents a low discharge.

An exemplary plasma display according to an embodiment of the present invention includes: a scan electrode to receive a scan voltage; a power source to supply the scan voltage; a first transistor having a first electrode electrically connected to the scan electrode; a Zener diode having a cathode electrically connected to a second electrode of the first transistor and having an anode electrically connected to the power source; at least one first resistor electrically connected to the scan electrode and a control electrode of the first transistor; and at least one second resistor electrically connected to the control electrode of the first transistor and the second electrode of the first transistor.

A voltage at the first electrode of the first transistor may be a first voltage higher than the scan voltage. The first voltage may be a final voltage finally supplied to the scan electrode during a reset period.

The plasma display may further include a second transistor electrically connected to the anode of the Zener diode and the power source.

The second transistor may perform as a ramp switch to gradually decrease a voltage at the scan electrode to a first voltage higher than the scan voltage during a reset period upon the second transistor being turned on.

The plasma display may further include a third transistor electrically connected to the scan electrode and the power source, the scan voltage being supplied to the scan electrode upon the third transistor being turned on.

At least one of the first and second resistors may be a variable resistor. At least one of the first and second resistors may be a resistor that varies according to temperature.

An exemplary voltage generator for generating a first voltage higher than a second voltage supplied by a power source includes: a Zener diode including an anode electrically connected to the power source; a transistor including a first electrode electrically connected to a cathode of the Zener diode; at least one first resistor electrically connected to the anode of the Zener diode and a control electrode of the transistor; and at least one second resistor electrically connected to the control electrode of the transistor and a second electrode of the transistor, the first voltage being generated at the second electrode of the transistor.

The previously described plasma display employs the inventive voltage generator. In other words, a plasma display according to the invention comprises a scan electrode to receive a scan voltage; a power source to supply the scan voltage; and an inventive voltage generator as previously described, wherein the second electrode of the transistor is electrically connected to the scan electrode; and the at least one first resistor is electrically connected to the scan electrode and the control electrode of the transistor.

At least one of the first and second resistors may be a variable resistor.

The first and second voltages may drive a plasma display.

The second voltage may be a scan voltage supplied to a scan electrode of a plasma display, and the first voltage may be a final voltage finally supplied during a reset period of the plasma display.

## BRIEF DESCRIPTION OF THE DRAWINGS

A more complete appreciation of the present invention and many of the attendant advantages thereof, will be readily apparent as the present invention becomes better understood by reference to the following detailed description when considered in conjunction with the accompanying drawings in which like reference symbols indicate the same or similar components, wherein:

FIG. 1 is a block diagram of a configuration of a plasma display according to an exemplary embodiment of the present invention.

FIG. 2 is a diagram of driving waveforms of the plasma display according to an exemplary embodiment of the present invention.

FIG. 3 is a diagram of the scan electrode driver 400 according to an exemplary embodiment of the present invention.

FIG. 4 is a diagram of a $\Delta V$ voltage generator 420a according to a first exemplary embodiment of the present invention.

FIG. 5A, FIG. 5B, and FIG. 5C are views of a $\Delta V$ voltage generator having a variable resistor.

FIG. 6 is a diagram of a $\Delta V$ voltage generator according to a second exemplary embodiment of the present invention.

FIG. 7 is a diagram of a $\Delta V$ voltage generator according to a third exemplary embodiment of the present invention.

FIG. 8 is a diagram of a $\Delta V$ voltage generator according to a fourth exemplary embodiment of the present invention.

FIG. 9 is a diagram of a $\Delta V$ voltage generator according to a fifth exemplary embodiment of the present invention.

FIG. 10 is a diagram of a $\Delta V$ voltage generator according to a sixth exemplary embodiment of the present invention.

## DETAILED DESCRIPTION OF THE INVENTION

Throughout this specification and the claims which follow, when it is described that an element is "connected" to another element, the element may be "directly connected" to the other element or "electrically connected" to the other element through a third element. Furthermore, the term "coupled to" could be used instead of "connected to". In addition, unless explicitly described to the contrary, the word "comprise" and variations such as "comprises" or "comprising" will be understood to imply the inclusion of stated elements but not the exclusion of any other elements.

In addition, wall charges mentioned in the following description mean charges formed and accumulated on a wall (e.g., a dielectric layer) close to an electrode of a discharge cell. A wall charge will be described as being "formed" or "accumulated" on the electrode, although the wall charges do not actually touch the electrodes. Furthermore, a wall voltage means a potential difference formed on the wall of the discharge cell by the wall charge.

When it is described in the specification that a voltage is maintained, it should not be understood to strictly imply that the voltage is maintained exactly at a predetermined voltage. To the contrary, even if a voltage difference between two points varies, the voltage difference is expressed to be maintained at a predetermined voltage in the case that the variance is within a range allowed in design constraints or in the case that the variance is caused due to a parasitic component that is usually disregarded by a person of ordinary skill in the art. In addition, since threshold voltages of semiconductor elements (e.g., a transistor and a diode) are very low compared to a discharge voltage, they are considered to be 0V.

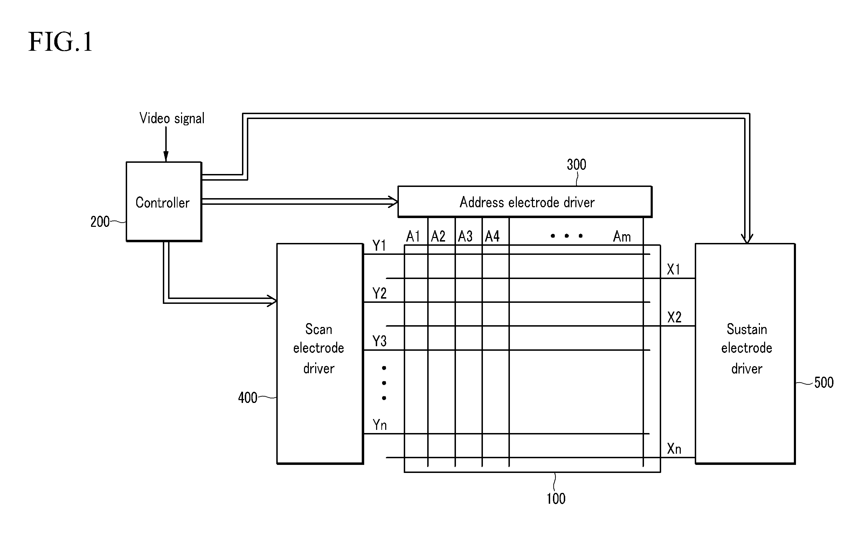

A plasma display according to an exemplary embodiment of the present invention, and a voltage generator thereof is described below with reference to the drawing figures. FIG. 1 is a schematic diagram of a configuration of a plasma display according to an exemplary embodiment of the present invention.

As shown in FIG. 1, the plasma display according to the exemplary embodiment of the present invention includes a Plasma Display Panel (PDP) 100, a controller 200, an address electrode driver 300, a scan electrode driver 400, and a sustain electrode driver 500.

The PDP 100 includes a plurality of address electrodes A1 to Am extending in a column direction, and a plurality of sustain and scan electrodes X1 to Xn and Y1 to Yn in pairs extending in a row direction. The sustain electrodes X1-Xn are formed in respective correspondence to the scan electrodes Y1 to Yn, and ends of the sustain electrodes X1-Xn are connected in common. In addition, the PDP 100 includes a substrate (not shown) having the sustain and scan electrodes X1-Xn and Y1 to Yn, and a substrate (not shown) having the address electrodes A1-Am. The two substrates are arranged to face each other with a discharge space between them so that the scan electrodes Y1 to Yn and the sustain electrodes X1-Xn may cross the address electrodes A1-Am. Discharge spaces provided at crossing regions of the address electrodes and X and Y electrodes form discharge cells. This formation of the plasma display panel 100 is an example, and other formations of a panel for supplying driving waveforms that will be described may be applied to the present invention.

The controller 200 receives external video signals, and outputs an address driving control signal, a sustain electrode driving control signal, and a scan electrode driving control signal. In addition, the controller 200 divides a frame into a plurality of subfields, and each subfield has a reset period, an address period, and a sustain period in a temporal manner.

After receiving the address driving control signal from the controller 200, the address electrode driver 300 supplies a display data signal for selecting discharge cells to be displayed to the respective address electrodes A1 to Am.

The sustain electrode driver 500 receives the sustain electrode driving control signal from the controller 200, and supplies a driving voltage to the sustain electrodes.

The scan electrode driver 400 receives the scan electrode driving control signal from the controller 200, and supplies the driving voltage to the scan electrodes.

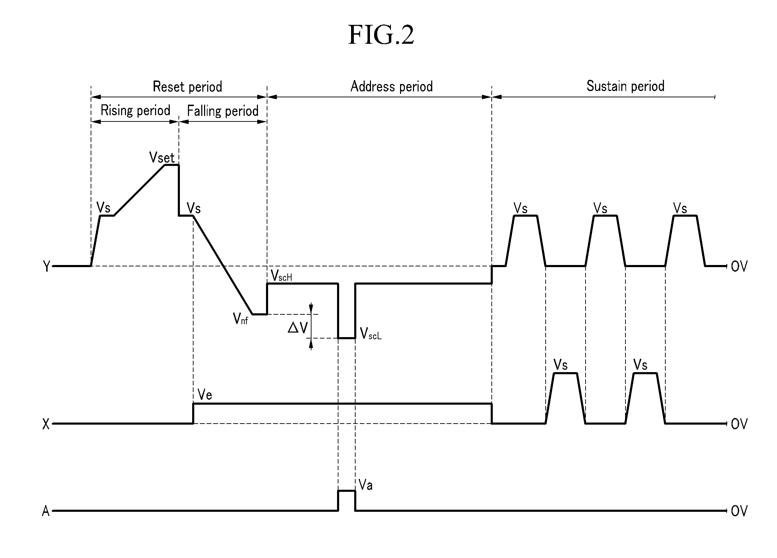

Driving waveforms of the plasma display according to the exemplary embodiment of the present invention are described below with reference to FIG. 2.

FIG. 2 is a diagram of driving waveforms of the plasma display according to an exemplary embodiment of the present invention. For convenience of description, a driving waveform supplied to a scan electrode (hereinafter referred to as a "Y electrode"), a sustain electrode (hereinafter referred to as an "X electrode"), and an address electrode (hereinafter referred to as an "A electrode") that form one cell will be described.

As shown in FIG. 2, a subfield includes a reset period, an address period, and a sustain period, and the reset period includes a rising period and a falling period.

During the rising period of the reset period, while the A and X electrodes are maintained at a reference voltage (0V in FIG. 2), a voltage at the Y electrode is gradually increased from a Vs voltage to a Vset voltage. As shown in FIG. 2, the voltage at the Y electrode is increased in a ramp pattern. Since a weak discharge is generated between the Y and X electrodes and between the Y and A electrodes while the voltage at the Y electrode is increased, (-) wall charges are formed on the Y electrode, and (+) wall charges are formed on the X and A electrodes. When the voltage of the Y electrode gradually changes as shown in FIG. 2, a weak discharge occurring in a discharge cell forms wall charges such that a sum of an externally supplied voltage and the wall voltage may be maintained at a discharge firing voltage. Such a process of forming wall charges is disclosed in U.S. Patent No. 5,745,086 by Weber. The Vset voltage is high enough to fire a discharge in cells of any condition, because every cell has to be initialized in the reset period. In addition, the Vs voltage equals the voltage supplied to the Y electrode in the sustain period, and is lower than a voltage for firing a discharge between the Y and X electrodes.

During the falling period of the reset period, the voltage at the Y electrode is gradually decreased from the Vs voltage to a negative voltage Vnf while the A electrode is maintained at the reference voltage and the X electrode is biased to a Ve voltage. While the voltage of the Y electrode decreases, a weak discharge occurs between the Y and X electrodes and between the Y and A electrodes. Accordingly, the negative (-) wall charges formed on the Y electrode and the positive (+) wall charges formed on the X and A electrodes are eliminated. In general, the Vnf voltage is usually set close to a discharge firing voltage between the Y and X electrodes. Then, the wall voltage between the Y and X electrodes becomes near 0V, and accordingly, a discharge cell that has not experienced an address discharge in the address period may be prevented from misfiring (the misfiring between the Y and X electrodes) in the sustain period. In addition, the wall voltage between the Y and A electrodes is determined by a level of the Vnf voltage, because the A electrode is maintained at the reference voltage.

Subsequently, during the address period, a scan pulse of a negative voltage VscL and an address pulse of a positive voltage Va are respectively supplied to Y and A electrodes to select discharge cells to be turned-on, while the X electrode is maintained at the Ve voltage. Non-selected Y electrodes are biased at a voltage VscH that is higher than the voltage VscL, and the reference voltage is supplied to the A electrodes of the turn-off cells (i.e., cells to be turned off). Then, the (+) wall charges are formed on the Y electrode and the (-) wall charges are formed on the A and X electrodes since an address discharge is generated on the discharge cell formed by the A electrode receiving the Va voltage and the Y electrode receiving the VscL voltage. For such an operation, the scan electrode driver 400 selects a Y electrode receiving the scan pulse of the scan voltage VscL among the Y electrodes Y1 to Yn. For example, in a single driving method, the Y electrode may be selected according to an order of arrangement of the Y electrodes in the vertical direction. When a Y electrode is selected, the address electrode driver 300 selects cells to be turned-on among cells formed on the selected Y electrode. That is, the address electrode driver 300 selects A electrodes to which the address pulse of the voltage of Va is supplied among the A electrodes A1 to Am.

In further detail, while the scan pulse of the VscL voltage is supplied to the scan electrode of a first row (Y1 in FIG. 1), the address pulse of the Va voltage is supplied to the A electrode positioned on the discharge cell of the first row to be turned-on. Then, a discharge is generated between the Y electrode of the first row and the A electrode receiving the Va voltage, the (+) wall charges are formed on the Y electrode, and the (-) wall charges are formed on the A and X electrodes. Accordingly, a wall voltage Vwxy is formed between the Y and X electrodes such that a potential of the Y electrode is higher than the potential of the X electrode. Subsequently, while the scan pulse of the VscL voltage is supplied to the Y electrode of a second row (Y2 in FIG. 2), the address pulse of the Va voltage is supplied to the A electrode positioned on the discharge cell of the second row to be turned-on. Then, an address discharge is generated in the discharge cell formed by the A electrode receiving the Va voltage and the Y electrode of the second row, and the wall charges are formed in the discharge cell as described above. In a like manner, while the scan pulse of the VscL voltage is sequentially supplied to the Y electrodes of remaining rows, the address pulse of the Va voltage is supplied to the A electrode positioned on the discharge cell to be turned-on to form the wall charges.

The scan voltage VscL according to the exemplary embodiment of the present invention is lower than the Vnf voltage, which is a final voltage supplied to the Y electrode during the reset period, by a $\Delta V$ voltage. A reason why the address discharge is generated in the discharge cell when the scan voltage VscL is lower than the Vnf voltage and the Va voltage is supplied, and a reason why the low discharge is generated are described below.

During the reset period, when the Vnf voltage that is the final voltage is supplied to the Y electrode, a sum of the wall voltage between the A and Y electrodes and the externally supplied Vnf voltage between the A and Y electrodes is set to be a discharge firing voltage Vfay between the A and Y electrodes.

A discharge may normally be generated when the scan voltage VscL is supplied to the Y electrode and 0V is supplied to the A electrode during the address period, because a voltage that is higher than the Vfay voltage is formed between the A and Y electrode. However, in the above case, the discharge is not generated since a discharge delay is longer than widths of the scan and address pulses.

When the Va voltage is supplied to the A electrode and the scan voltage VscL is supplied to the Y electrode, the voltage that is higher than the Vfay voltage is formed between the A and Y electrodes, the discharge delay is reduced to be shorter than the widths of the scan and address pulses, and the discharge may be generated. In general, when the scan voltage that is equal to the Vnf voltage is supplied to the Y electrode, the discharge may be generated since the voltage that is higher than the Vfay voltage is formed between the A and Y electrodes. However, when the VscL voltage, which is lower than the Vnf voltage by the $\Delta V$ voltage, is supplied to the Y electrode as in the exemplary embodiment of the present invention, the voltage between the A and Y electrodes is further increased, the discharge delay is further reduced, and therefore, the address discharge may be appropriately generated. Accordingly, the low address discharge may be prevented.

During the sustain period, the sustain pulses of opposite phases, which are a high level voltage Vs and a low level voltage 0V, are supplied to the Y electrode and the X electrode. Then, a sustain discharge is generated in the selected discharge cell during the address period. The number of sustain pulses corresponds to the weight value of the corresponding subfield.

In general, as in the driving waveform according to the exemplary embodiment of the present invention, to differently set the Vnf voltage that is the final voltage during the reset period and the VscL voltage that is the scan voltage during the address period, it is necessary to separately provide a power source for generating the Vnf voltage and a power source for generating the VscL voltage. Hereinafter, the scan electrode driver 400 for generating two voltages using a single power source is described.

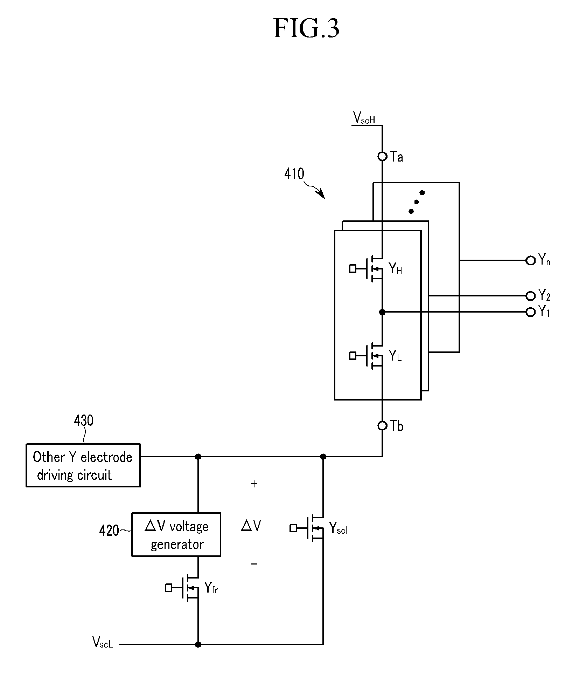

FIG. 3 is a diagram of the scan electrode driver 400 according to an exemplary embodiment of the present invention.

As shown in FIG. 3, the scan electrode driver 400 includes a plurality of scan Integrated Circuits (ICs) 410, a $\Delta V$ voltage generator 420, transistors Yfr and Yscl, and another Y electrode driving circuit 430. In FIG. 3, the respective transistors are illustrated as being n-channel Field Effect Transistors (FETs), more particularly, N-channel Metal Oxide Semiconductor (NMOS) transistors, and a body diode is formed in the respective transistors in a direction from a source to a drain. Rather than using NMOS transistors, other transistors having similar functions may be used. In addition, the transistors are respectively illustrated as being single transistors in FIG. 3. However, the present invention is not limited thereto, and the transistors may be formed by a plurality of transistors arranged in parallel.

The plurality of scan ICs 410 respectively include a transistor $Y_H$, a transistor $Y_L$, a terminal Ta, and a terminal Tb in common. A drain of the transistor $Y_H$ is connected to the terminal Ta, and a source of the transistor $Y_L$ is connected to the terminal Tb. A source of the transistor $Y_H$ is connected to a drain of the transistor YL, and a node of the transistors $Y_H$ and $Y_L$ is connected to one of the scan electrodes Y1 to Yn. A voltage VscH is supplied to the terminal Ta by a power source VscH.

A drain of the transistor Yscl is connected to the terminal Tb of the scan IC 410, and a source thereof is connected to a power source VscL for supplying the VscL voltage. The $\Delta V$ voltage generator 420 is connected to the terminal Tb and a drain of the transistor Yfr, and the source of the transistor Yfr is connected to the power source VscL for supplying the VscL voltage. The transistor Yfr is a ramp switch, and it is turned on to supply a predetermined current to the Y electrode and gradually decreases the voltage at the Y electrode. A method of supplying the predetermined current to the Y electrode through the transistor Yfr and gradually decreasing the voltage at the Y electrode is well known to those skilled in the art, and therefore detailed descriptions thereof have been omitted. The $\Delta V$ voltage generator 420

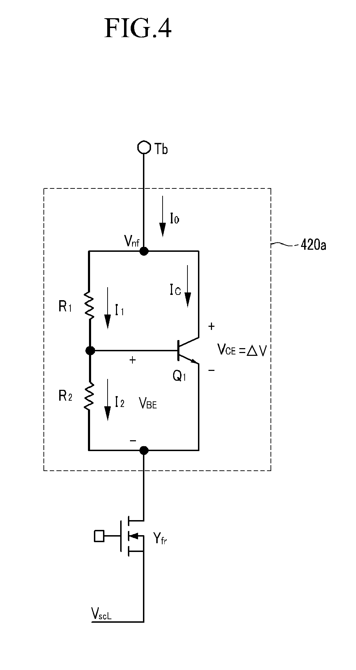

generates a voltage ΔV (Vnf-VscL) shown in FIG. 2 without additionally providing another power source. A configuration of the ΔV voltage generator 420 is described below with reference to FIGs. 4 to 7.

The other Y electrode driving circuit 430 is connected to the terminal Tb and the Y electrode, and generates various driving waveforms (e.g., the rising waveform of the reset period, and the sustain pulse) supplied to the Y electrode. The configuration of the other Y electrode driving circuit 430 is not directly related to the exemplary embodiment of the present invention, and therefore a description thereof has been omitted.

During the falling period of the reset period, the transistor Yfr and respective transistors $Y_L$ of the plurality of scan ICs 410 are turned on, and the voltage at the Y electrode is gradually decreased to the voltage Vnf (VscL+ΔV) by the ΔV voltage generator 420. The voltage at the Y electrode is gradually decreased to the VscL voltage when the transistor Yfr is turned on, but the ΔV voltage generated by the ΔV voltage generator 420 is added, and therefore the voltage at the Y electrode is decreased to the voltage Vnf (VscL+ΔV).

During the address period, the transistor Yscl is turned on, the transistor $Y_L$ of the scan IC corresponding to the scan electrode to be selected is turned on, and the scan voltage VscL is supplied to the corresponding Y electrode. The transistor $Y_H$ is turned on and the VscH voltage is supplied to the Y electrode not to be selected in the scan IC corresponding to the Y electrode not to be selected.

Hereinafter, the ΔV voltage generator 420 for generating a voltage difference of ΔV is described in more detail with reference to FIGs. 4 to 10.

FIG. 4 is a diagram of a ΔV voltage generator 420a according to a first exemplary embodiment of the present invention.

The ΔV voltage generator 420a includes a transistor Q1 and resistors R1 and R2. The transistor Q1 is a bipolar transistor.

A collector of the transistor Q1 is connected to the terminal Tb of the plurality of scan ICs 410, and an emitter thereof is connected to the drain of the transistor Yfr. A terminal of the resistor R1 is connected to the collector of the transistor Q1 (i.e., the terminal Tb), and another terminal of the resistor R1 is connected to a base of the transistor Q1. A terminal of the resistor R2 is connected to the base of the transistor Q1 and another terminal of the resistor R2 is connected to the emitter of the transistor Q1. In addition, the resistors R1 and R2 are connected to each other, and a node thereof is connected to the base of the transistor Q1.

When a current lo is low, the transistor Q1 is turned off, and the current lo flows to the resistors R1 and R2. However, when the current lo flows sufficiently enough to turn on the transistor Q1, the current lo flows to the resistors R1 and R2 and the transistor Q1. In this case, a collector-emitter voltage $V_{CE}$ of the transistor Q1 is given by Equation 1.

## Equation 1:

$$V_{CE} = I1*R1 + I2*R2$$

In Equation 1, when a base current of the transistor Q1 is ignored, the current I1 is given as $I1 ≒ I2$. The current I2 is given as $I2 = V_{BE}/R2$. Accordingly, the collector-emitter voltage $V_{CE}$ of the transistor Q1 is given by Equation 2.

## Equation 2:

$$V_{CE} = (1 + R1/R2) * V_{BE}$$

The collector-emitter voltage VCE of the transistor Q1 is the ΔV voltage generated by the ΔV voltage generator 420a. Referring to Equation 2, the collector-emitter voltage ($V_{CE}$=ΔV) of the transistor Q1 may be established to be a desired value in proportion to a base-emitter voltage $V_{BE}$ of the transistor Q1 when a ratio of the resistance values of the resistors R1 and R2 is adjusted.

That is, the voltage ΔV given by Equation 2 may be generated by the ΔV voltage generator 420a according to the first exemplary embodiment of the present invention, and a value of ΔV is determined by the resistance values of the resistors R1 and R2 and the base-emitter voltage $V_{BE}$ of the transistor Q1. When the base-emitter voltage $V_{BE}$ of the transistor Q1 is set to a predetermined value by the characteristics of the transistor Q1, the desired ΔV may be obtained by changing the values of the resistors R1 and R2. Particularly, it is nessary to set the ΔV to various values to improve the low discharge in FIG. 2, and the ΔV may be set to various values by changing the values of the resistors R1 and R2 by the ΔV voltage generator according to the first exemplary embodiment of the present invention.

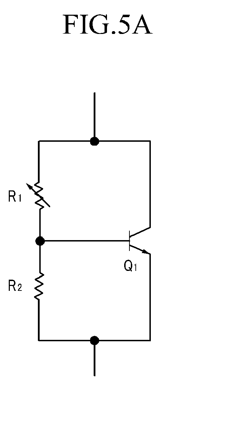

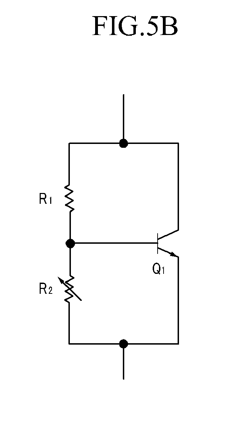

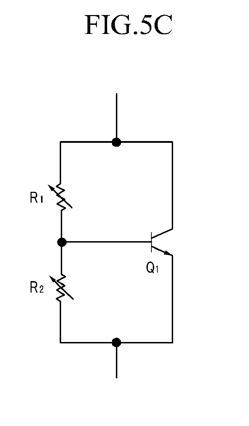

In addition, rather than using fixed resistors, variable resistors may be used for the resistors R1 and R2 as shown in FIGs. 5A, 5B, and 5C. That is, a variable resistor may be used for either of the resistors R1 and R2 or for both of the resistors R1 and R2. When variable resistors are used for the resistors R1 and R2, the value of ΔV may be changed by adjusting the variable resistors after design. Accordingly, the low discharge may be further improved.

In addition, a resistor that varies according to temperature may be used for the resistors R1 and R2. That is, the resistors R1 and R2 may be set to have a Positive Temperature Coefficient (PTC) (i.e., a characteristic of increasing resistance as the temperature increases), or they may be set to have a Negative Temperature Coefficient (NTC) (i.e., a characteristic of decreasing resistance as the temperature increases). When the temperature is decreased, the wall charges in the discharge cell are not actively changed, and the low address discharge deteriorates. In this case, when the resistor R1 is set to have an NTC and the resistor R2 is set to have a PTC, the value of ΔV is further increased by Equation 2 when the temperature is decreased. Accordingly, the problem of the low address discharge at a low temperature may be solved. In other cases, the problem caused by the temperature may be solved by appropriately setting the resistors R1 and R2 to vary according to temperature.

It has been described that the transistor Q1 is a bipolar transistor according to the first exemplary embodiment of the present invention. However, the present invention is not limited thereto, and a Metal-Oxide Semiconductor Field Effect Transistor (hereinafter referred to as a "MOSFET") or an Insulated Gate Bipolar Transistor (hereinafter referred to as an "IGBT") may be used, as described below.

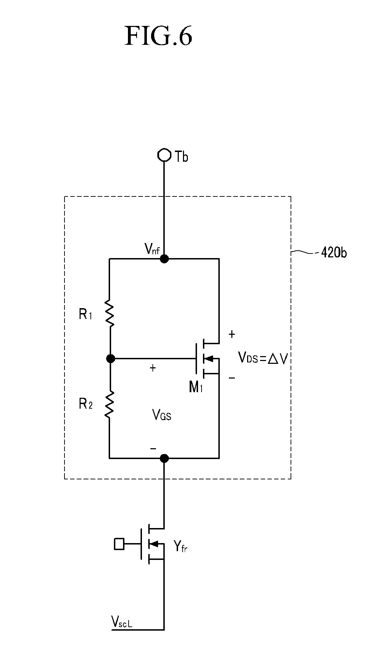

FIG. 6 is a diagram of a ΔV voltage generator 420b according to a second exemplary embodiment of the present invention.

As shown in FIG. 6, the ΔV voltage generator 420b according to the second exemplary embodiment of the present invention is the same as that of the first exemplary embodiment of the present invention except that a MOSFET transistor M1 is used rather than the bipolar transistor Q1, and therefore descriptions of parts that have been previously described have been omitted.

Since the ΔV voltage generator 420b according to the second exemplary embodiment of the present invention uses the MOSFET transistor M1, the ΔV voltage, which is a drain-source voltage $V_{DS}$ of the transistor M1, is given by Equation 3.

Equation 3:

$$V_{DS} = (1 + R1/R2) * V_{GS}$$

In Equation 3, $V_{GS}$ denotes a gate-source voltage of the transistor M1. As shown in Equation 3, when the transistor M1 is a MOSFET, the base-emitter voltage $V_{BE}$ of the transistor Q1 in Equation 2 is changed to a gate-source voltage $V_{GS}$ of the transistor M1.

As described above, in the ΔV voltage generator 420b according to the second exemplary embodiment of the present invention, the value of ΔV is determined by the gate-source voltage ($V_{GS}$) of the transistor M1 and the values of the resistors R1 and R2, as shown in Equation 3.

In addition, in the ΔV voltage generator 420b according to the second exemplary embodiment of the present invention, the resistors R1 and R2 may be replaced by the variable resistors in a like manner to the first exemplary embodiment of the present invention, and they may be replace by resistors that vary according to temperature.

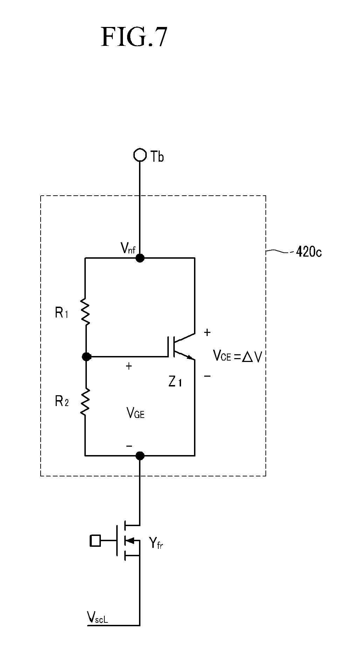

FIG. 7 is a diagram of a ΔV voltage generator 420c according to a third exemplary embodiment of the present invention.

As shown in FIG. 7, the ΔV voltage generator 420c according to the third exemplary embodiment of the present invention is the same as that of the first exemplary embodiment of the present invention except that the transistor Q1 is replaced by an IGBT transistor Z1, and therefore descriptions of parts that have been previously described have been omitted.

Since the ΔV voltage generator 420c according to the third exemplary embodiment of the present invention uses an IGBT transistor Z1, the ΔV voltage, which is a collector-emitter voltage $V_{CE}$ of the transistor Z1, is given by Equation 4.

Equation 4:

$$V_{CE} = (1 + R1/R2) * V_{GE}$$

In Equation 4, $V_{GE}$ denotes a gate-emitter voltage of the transistor Z1. As shown in Equation 4, when the transistor Z1 is an IGBT, the base-emitter voltage $V_{BE}$ of the transistor Q1 is replaced by a gate-emitter voltage $V_{GE}$ of the transistor Z1.

As described above, in the $\Delta V$ voltage generator 420c according to the third exemplary embodiment of the present invention, the value of $\Delta V$ is determined by the gate-emitter voltage $V_{GE}$ of the transistor Z1 and the values of the resistors R1 and R2.

In addition, in the $\Delta V$ voltage generator 420c according to the third exemplary embodiment of the present invention, the resistors R1 and R2 may be replaced by variable resistors in a like manner to the first exemplary embodiment of the present invention, and they may be replaced by resistors that vary according to temperature.

A $\Delta V$ voltage generator for generating a greater $\Delta V$ voltage is described as follows.

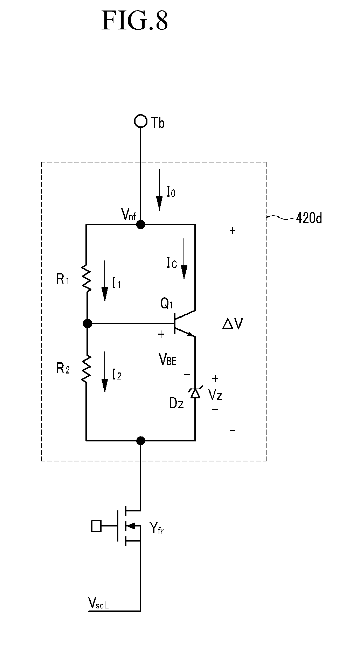

FIG. 8 is a diagram of a $\Delta V$ voltage generator 420d according to a fourth exemplary embodiment of the present invention.

As shown in FIG. 8, a configuration of the $\Delta V$ voltage generator 420d according to the fourth exemplary embodiment of the present invention is the same as that of the first exemplary embodiment of the present invention except that a Zener diode Dz is additionally provided, and therefore, descriptions of parts that have been previously described have been omitted. A cathode of the Zener diode Dz is connected to the emitter of the transistor Q1, and an anode thereof is connected to the drain of the transistor Yfr. In FIG. 8, Vz denotes a breakdown voltage of the Zener diode Dz.

The $\Delta V$ voltage generated by the $\Delta V$ voltage generator 420d according to the fourth exemplary embodiment of the present invention is obtained by substituting ($V_{BE}$ + Vz) for $V_{BE}$ in Equation 2. When a base current of the transistor Q1 is ignored, I1 $\fallingdotseq$ I2 and I2=($V_{BE}$+Vz)/R2. Accordingly, when I1$\fallingdotseq$I2 and I2=($V_{BE}$+Vz)/R2 are applied to Equation 1, the $\Delta V$ voltage generated by $\Delta V$ voltage generator 420d according to the fourth exemplary embodiment of the present invention is given by Equation 5.

Equation 5:

$$\Delta V = (1 + R1/R2) * (Vz + V_{BE})$$

Accordingly, the $\Delta V$ voltage generated by the $\Delta V$ voltage generator 420d according to the fourth exemplary embodiment of the present invention may be greater than the $\Delta V$ voltage according to the first exemplary embodiment of the present invention. In general, since $V_{BE}$ is a lower value, there is a limit in forming a high $\Delta V$ value even when a ratio of R1 and R2 is adjusted. However, according to the fourth exemplary embodiment of the present invention, the $\Delta V$ voltage value is determined by the $V_{BE}$ value and the Vz value. Accordingly, since the Zener diode Dz having a high Vz value is used, a greater $\Delta V$ value may be realized.

In addition, in the $\Delta V$ voltage generator 420d according to the fourth exemplary embodiment of the present invention, a constant $\Delta V$ value may be obtained when temperature changes.

As shown in FIG. 8, the base-emitter of the npn bipolar transistor Q1 has a pn diode-connection, wherein the pn diode-connection is connected in an inverse direction of the Zener diode Dz. That is, since the two diodes are inversely connected, temperature coefficients between the two diodes offset each other. When a potential difference according to temperature is applied to Equation 5, it will result in Equation 6.

Equation 6:

$$\Delta V + \delta V = [1 + \{(R1 + \delta R1)/(R2 + \delta R2)\}] * [(Vz + \delta Vz) + (V_{BE} - \delta V_{BE})]$$

In Equation 6, $\Delta V$, Vz, $V_{BE}$, R1, and R2 are values at room temperature, and $\delta V_Z$, $\delta V_{BE}$, $\delta R1$, and $\delta R2$ are variation values according to temperature. Since polarity of the pn diode formed between the base and the emitter of the transistor Q1 is opposite to that of the Zener diode Dz, it is shown as - $\delta V_{BE}$.

Since the temperature of the resistors changes according to the ratio of R1 and R2, the temperature change of the resistors is relatively lower than that of the Zener diode Dz and the transistor Q1. Accordingly, when a first term in Equation 6 is considered, a temperature coefficient variation of the two diodes is given as ($\delta V_Z$ - $\delta V_{BE}$), and therefore they offset each other. Particularly, when using a transistor and a Zener diode having a characteristic of $\delta Vz = \delta V_{BE}$, the temperature change of the $\Delta V$ value may be minimized.

In addition, a MOSFET or an IGBT may be used for the bipolar transistor Q1 in the $\Delta V$ voltage generator

according to the fourth exemplary embodiment of the present invention in a like manner to the second and third exemplary embodiments of the present invention.

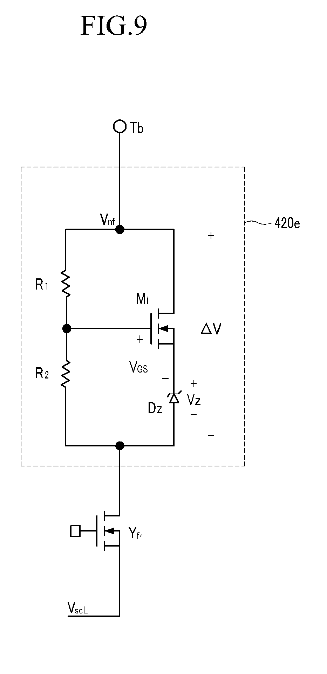

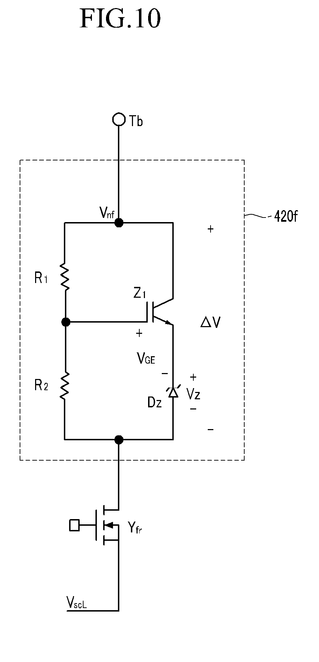

FIG. 9 is diagram of a ΔV voltage generator 420e according to a fifth exemplary embodiment of the present invention, and FIG. 10 is a diagram of a ΔV voltage generator 420f according to a sixth exemplary embodiment of the present invention. That is, an MOSFET substitutes for the bipolar transistor Q1 in FIG. 9, and an IGBT substitutes for the bipolar transistor Q1 in FIG. 10.

The ΔV voltage generated by the ΔV voltage generator 420e according to the fifth exemplary embodiment of the present invention is obtained by substituting $(V_{GS} + Vz)$ for $V_{GS}$ in Equation 3. In addition, the ΔV voltage generated by the ΔV voltage generator 420f according to the sixth exemplary embodiment of the present invention is obtained by substituting $(V_{GE} + Vz)$ for $V_{GE}$ in Equation 4.

In a like manner of the fourth exemplary embodiment of the present invention, the high ΔV value may be obtained and the temperature change of the ΔV voltage value may be minimized according to the fifth and sixth exemplary embodiments of the present invention.

Rather than using resistors R1 and R2, a variable resistor may be used, and a resistor that varies according to temperature may be used in the fourth to sixth exemplary embodiments of the present invention.

According to the exemplary embodiments of the present invention, the final voltage and the scan voltage of the reset period may be generated by using a single power source. In addition, since the resistors R1 and R2 are simply changed, the ΔV value may be variously realized. Furthermore, since the Zener diode is additionally provided, a further increased ΔV value may be realized, and the temperature change of the ΔV value may be minimized.

**Claims**

1. A voltage generator (420) for generating a first voltage higher than a second voltage supplied by a power source, the voltage generator (420) comprising:

   a Zener diode (Dz) including an anode electrically connected to the power source;
   a first transistor including a first electrode electrically connected to a cathode of the Zener diode (Dz);
   at least one first resistor ($R_2$) electrically connected to the anode of the Zener diode (Dz) and a control electrode of the first transistor; and
   at least one second resistor ($R_1$) electrically connected to the control electrode of the first transistor and a second electrode of the first transistor, the first voltage being generated at the second electrode of the first transistor.

2. The voltage generator of claim 1, wherein at least one of the first and second resistors ($R_1$, $R_2$) is a variable resistor.

3. The voltage generator of claim 1 or 2, wherein the first and second voltages drive a plasma display.

4. The voltage generator according to at least one of the previous claims, wherein the second voltage is a scan voltage (VscL) supplied to a scan electrode (Y) of a plasma display, and the first voltage is a final voltage (Vnf) finally supplied during a reset period of the plasma display.

5. A plasma display comprising:

   a scan electrode (Y) to receive a scan voltage (VscL);
   a power source to supply the scan voltage (VscL); and
   a voltage generator (420) according to claims 1 to 4, wherein
   a second electrode of the first transistor is electrically connected to the scan electrode (Y); and
   the at least one second resistor ($R_1$) is electrically connected to the scan electrode (Y) and the control electrode of the first transistor.

6. The plasma display of claim 5, wherein a voltage at the first electrode of the first transistor is a first voltage higher than the scan voltage (VscL).

7. The plasma display of claims 5 or 6, further comprising a second transistor electrically connected to the anode of the Zener diode (Dz) and the power source.

8. The plasma display of claim 7, wherein the second transistor performs as a ramp switch to gradually decrease a voltage at the scan electrode (Y) to a first voltage higher than the scan voltage (VscL) during a reset period upon the second transistor being turned on.

9. The plasma display of claim 8, further comprising a third transistor electrically connected to the scan electrode (Y) and the power source, the scan voltage (VscL) being supplied to the scan electrode (Y) upon the third transistor being turned on.

10. The plasma display according to at least one of the claims 5 to 9, wherein at least one of the first and second resistors ($R_1$, $R_2$) is a resistor that varies according to temperature.

11. Use of the voltage generator according to claims 1 to 4 in a plasma display for driving the scan electrode (Y).

FIG.1

Video signal

Controller
200

Address electrode driver
300

A1 A2 A3 A4 ... Am

Scan electrode driver
400

Y1 Y2 Y3 ... Yn

X1 X2 ... Xn

Sustain electrode driver
500

100

FIG.2

# FIG.3

# FIG.4

# FIG.5A

# FIG.5B

# FIG.5C

# FIG.6

# FIG.7

$V_{CE} = \triangle V$

$V_{GE}$

# FIG.8

# FIG.9

# FIG.10

European Patent
Office

**EUROPEAN SEARCH REPORT**

Application Number

EP 07 11 6058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 152 582 A (BOSCH GMBH ROBERT [DE]) 28 August 1985 (1985-08-28) | 1-3 | INV. G09G3/28 |
| Y | * the whole document * | 4-11 | |
| X | US 3 461 376 A (WANLASS CRAVENS L) 12 August 1969 (1969-08-12) * column 7, line 24 - line 63 * * figure 5 * | 1-3 | |
| X | US 4 263 622 A (HINN WERNER) 21 April 1981 (1981-04-21) * column 4, line 64 - column 5, line 38 * * figure 9 * | 1,2 | |
| X | EP 0 310 280 A (MEASUREMENT TECH LTD [GB]) 5 April 1989 (1989-04-05) | 1-3 | |
| Y | * column 6, lines 3-13 * * figure 7 * | 4-11 | TECHNICAL FIELDS SEARCHED (IPC) |
| Y | US 2005/225510 A1 (ITO KAZUHIRO [KR] ET AL) 13 October 2005 (2005-10-13) * paragraphs [0067] - [0079] * * figures 7-10 * | 4-11 | G09G |
| Y | EP 1 271 462 A (FUJITSU LTD [JP] HITACHI LTD [JP]) 2 January 2003 (2003-01-02) * paragraphs [0033], [0051] - [0053] * * figures 1,7 * | 4-11 | |

The present search report has been drawn up for all claims

| Place of search | Date of completion of the search | Examiner |
|---|---|---|
| The Hague | 13 November 2007 | Ladiray, Olivier |

EPO FORM 1503 03.82 (P04C01)

**ANNEX TO THE EUROPEAN SEARCH REPORT
ON EUROPEAN PATENT APPLICATION NO.**                      EP 07 11 6058

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2007

| Patent document cited in search report | | Publication date | Patent family member(s) | | Publication date |
|---|---|---|---|---|---|
| EP 0152582 | A | 28-08-1985 | DE | 3405661 A1 | 22-08-1985 |
| | | | JP | 1879441 C | 07-10-1994 |
| | | | JP | 6003565 B | 12-01-1994 |
| | | | JP | 60189521 A | 27-09-1985 |
| US 3461376 | A | 12-08-1969 | FR | 1511358 A | 26-01-1968 |
| | | | GB | 1180576 A | 04-02-1970 |
| US 4263622 | A | 21-04-1981 | AT | 383926 B | 10-09-1987 |
| | | | AT | 46180 A | 15-01-1987 |
| | | | AU | 525920 B2 | 09-12-1982 |
| | | | AU | 5486880 A | 07-08-1980 |
| | | | BE | 881415 A1 | 16-05-1980 |
| | | | CA | 1138100 A1 | 21-12-1982 |
| | | | DE | 3003322 A1 | 07-08-1980 |
| | | | DK | 37780 A | 31-07-1980 |
| | | | ES | 488069 A1 | 01-10-1980 |
| | | | FI | 800194 A | 31-07-1980 |
| | | | FR | 2448270 A1 | 29-08-1980 |
| | | | GB | 2042308 A | 17-09-1980 |
| | | | HK | 16987 A | 06-03-1987 |
| | | | IT | 1129551 B | 11-06-1986 |
| | | | JP | 1045276 B | 03-10-1989 |
| | | | JP | 1575319 C | 24-08-1990 |
| | | | JP | 55102986 A | 06-08-1980 |
| | | | MY | 72385 A | 31-12-1985 |
| | | | NL | 8000553 A | 01-08-1980 |
| | | | NZ | 192739 A | 30-09-1983 |
| | | | PL | 221660 A1 | 03-11-1980 |
| | | | PT | 70711 A | 01-02-1980 |
| | | | SE | 443273 B | 17-02-1986 |
| | | | SE | 8000550 A | 31-07-1980 |
| | | | SU | 1237094 A3 | 07-06-1986 |
| EP 0310280 | A | 05-04-1989 | DE | 3852088 D1 | 15-12-1994 |
| | | | DE | 3852088 T2 | 23-03-1995 |
| | | | GB | 2210521 A | 07-06-1989 |
| | | | JP | 1152919 A | 15-06-1989 |
| US 2005225510 | A1 | 13-10-2005 | CN | 1684126 A | 19-10-2005 |
| | | | KR | 20050099703 A | 17-10-2005 |
| EP 1271462 | A | 02-01-2003 | JP | 2003015602 A | 17-01-2003 |
| | | | KR | 20030003653 A | 10-01-2003 |
| | | | US | 2003001512 A1 | 02-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5745086 A, Weber